# EUROPEAN PATENT SPECIFICATION

(11) **EP 2 692 405 B1**
(45) Date of publication and mention of the grant of the patent: **13.03.2019**
(21) Application number: 12762769.3
(22) Date of filing: 29.03.2012
(51) Int. Cl.: B01D 39/16, B01D 29/01, B32B 5/26, D04H 3/02

(54) **FILTERING MEDIUM FOR FILTER, AND WATER FILTERING APPARATUS PROVIDED WITH FILTERING MEDIUM**
FILTERMEDIUM FÜR FILTER SOWIE WASSERFILTERUNGSVORRICHTUNG MIT DEM FILTERMEDIUM
ÉLÉMENT FILTRANT POUR FILTRE ET APPAREIL DE FILTRATION D'EAU COMPRENANT L'ÉLÉMENT FILTRANT

(30) Priority: 30.03.2011 JP 2011076026
(43) Date of publication of application: 05.02.2014
(73) Proprietor: Kuraray Co., Ltd., Okayama 710-0801 (JP)
(72) Inventor: HOSOYA, Takayoshi, Fujisawa-shi KANAGAWA 251-0861 (JP); KAWAI, Hiroyuki, Okayama-shi Okayama 702-8601 (JP); HAYAKAWA, Tomohiro, Okayama-shi Okayama 702-8601 (JP); ARAMAKI, Jun, Osaka-shi Osaka 530-8611 (JP)
(74) Representative: Vossius & Partner Patentanwälte Rechtsanwälte mbB
(86) International application number: PCT/JP2012/058331
(87) International publication number: WO 2012/133631

(56) References cited:
- EP-A1- 1 522 620
- WO-A1-2010/027063
- JP-A- 2009 006 272
- JP-A- 2009 279 930
- JP-A- 2009 279 930
- JP-A- 2010 275 663
- JP-A- 2011 183 254
- US-A1- 2006 137 318

## Description

### BACKGROUND OF THE INVENTION

### (Field of the Invention)

The present invention relates to a filtering material for filtering water in which an ethylene-vinyl alcohol copolymer nanofiber layer and a base material comprising a nonwoven or woven fabric formed from hydrophilic fibers are laminated on each other, and a water filtering apparatus provided with the filtering material.

### (Description of Related Art)

As a filtering material for removing fine particles contained in water, a filtering material has been proposed in which an ultrafine fiber aggregate layer and a fine fiber aggregate layer are laminated on each other (Patent Document 1). The ultrafine fiber aggregate layer is formed from nanofibers produced by electro-spinning and having a single fiber average diameter of not less than 10 nm and less than 500 nm. The fine fiber aggregate layer has an average fiber diameter of not less than 0.5 µm and not greater than 5 µm.

In addition, a filtering material for filter has been proposed which comprises a sheet in which a layer formed from nanofibers produced by electro-spinning and having a single fiber average diameter of 10 to 1000 nm is laminated with a base material comprising a nonwoven or woven fabric formed from fibers having a single fiber average diameter of greater than 5 µm (Patent Document 2).

US 2006/137318 A1 discloses a filtering material comprising a laminated sheet which comprises a nanofiber layer formed from a nanofiber having a single fiber average diameter of 10 to 1000 nm, the nanofiber layer meeting all the following conditions:the nanofiber layer has a basis weight of 2.5 to 25 g/m2, the nanofiber is a continuous long fiber, and may comprise polyvinyl alcohol (PVA) and a base material (scrim), which may comprise a blend of PVA and rayon fibers and has a fiber average diameter larger than the nanofibers.

### [Related Art Document]

[Patent Document 1] JP Laid-open Patent Publication No. 2005-218909
[Patent Document 2] JP Laid-open Patent Publication No. 2009-6272

### SUMMARY OF THE INVENTION

The filtering material disclosed specifically in Patent Document 1 is a filtering material which includes a polyacrylonitrile ultrafine fiber aggregate layer formed by electro-spinning and a polyacrylonitrile or polypropylene fine fiber aggregate layer formed by electro-spinning. Since the fine fiber aggregate layer which supports the ultrafine fiber aggregate layer is also formed by electro-spinning, there is a problem that the strength of the support layer comprising the fine fiber aggregate layer is insufficient to be used as a liquid filter.

With regard to the filtering material disclosed in Patent Document 2, since both the nanofiber layer and the base material are preferably formed from hydrophobic fibers such as polyolefin, polyester, or polyamide fibers, when the filtering material is used for filtering water, the nanofiber layer and the base material layer are easy to separate from each other. In addition, since the initial pressure loss of the filter material is high, there is still a room for improvement in filtration accuracy and filtering life.

A first object to be attained by the present invention is to provide a filtering material, for filtering water, which is suitable for removing fine particles contained in water, has a low initial pressure loss, and has improved filtration accuracy and filtering life.

Furthermore, a second object of the present invention is to provide a filter cartridge provided with the filtering material, and a water filtering apparatus provided with the cartridge.

The first object of the present invention is attained by obtaining a a water filter material as described in claim 1.

In the present invention, the filtering material for filtering water refers to a member which is used for the purpose of collecting and removing particles contained in water or collecting and recovering particles contained in water by bringing the filtering material provided in a filter (a filtering apparatus) into contact with water so as to provide a filtering function.

In addition, in the present invention, the term of hydrophilic fiber means a fiber comprising a polymer containing a hydrophilic group (OH group, COOH group, NH₂ group, etc.) as a repeating unit at least on the fiber surface, and the polymer may be a polymer constituting the whole fiber, or a coating on the fiber surface. Further, the polymer may be a homopolymer or a copolymer.

The ethylene-vinyl alcohol copolymer has an ethylene content of 3 to 70 mol%.

The nanofiber layer is preferably a fiber aggregate layer obtained by electro-spinning. Moreover, the hydrophilic fibers in the base material are preferably formed from a polymer comprising a polyvinyl alcohol polymer.

The base material preferably has a basis weight of 20 to 500 g/m².

The laminated sheet preferably comprises a base material and an electro-spun fiber aggregate layer formed on the base material, and the laminated sheet is further preferably subjected to embossing treatment or calendaring treatment after formation of the fiber aggregate layer.

The above-described second object of the present invention is attained by obtaining a filter cartridge including at least partially the above filtering material for filtering water according to the present invention.

In the present invention, the filter cartridge refers to a filter cartridge in which a filtering material is formed into a predetermined shape such as a plate shape or a cylindrical shape and packed or stored in a body (or housing).

In the present invention, the water filtering apparatus refers to an apparatus comprising the above filter cartridge, the apparatus allowing an unnecessary or collectable substance, such as fine particle, to be removed or retrieved from water by filtration.

The filtering material for filtering water obtained by the present invention has excellent adhesion between the nanofiber layer and the base material, and the nanofiber layer and the base material layer are not easy to separate from each other. Thus, the filtering material has long durability and allows a filter to be used for a long period of time.

In addition, the filtering material for filtering water obtained by the present invention makes it possible to provide a filter having a low initial pressure loss. Thus, the filter has not only high filtration accuracy but also prolonged filtering life. Also from this respect, the filter can be used for a long period of time.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

Fig. 1 is an explanatory diagram illustrating an embodiment in which a filtering material for filtering water according to the present invention is incorporated into a flat plate type filter cartridge;
Fig. 2 is an explanatory diagram illustrating an embodiment in which the filtering material for filtering water according to the present invention is pleated in order to incorporate the filtering material for filtering water according to the present invention into a pleated type filter cartridge;
Fig. 3 is an explanatory diagram illustrating an example of a filter cartridge including filter units each having incorporated therein the filtering material for filtering water according to the present invention;
Fig. 4 is a photograph to show a state of a surface of the nanofiber layer of the filtering material for filtering water according to the present invention (a pleated filtering material of Example 1) under the condition that the filter was taken out after flowing fluid for 24 hours followed by washing as described in EXAMPLES; and
Fig. 5 is a photograph to show a state of a surface of the nanofiber layer of the filtering material for filtering water in a comparative example (a pleated filtering material of Comparative Example 3) under the condition that the filter was taken out after flowing fluid for 24 hours followed by washing as described in EXAMPLES.

### DESCRIPTION OF EMBODIMENTS

### (Basic Configuration of Filtering Material for Filter)

A filtering material for filtering water according to the present invention basically comprises (A) a nanofiber layer formed from fibers having a single fiber average diameter of 10 to 1000 nm and comprising an ethylene-vinyl alcohol copolymer, and (B) a base material comprising a nonwoven or woven fabric formed from hydrophilic fibers having a single fiber average diameter of not less than 1 µm in the state that the (A) and (B) are laminated on each other in a sheet form. Thanks to the presence of the nanofiber layer formed from the fibers having an average fiber diameter of 10 to 1000 nm, even fine particles can be removed at a very excellent filtration accuracy. In the case where the filter material consists of only the nanofiber layer, the mechanical properties are insufficient. Thus, the nanofiber layer is supported by a base material comprising a hydrophilic nonwoven or woven fabric to be laminated on each other.

### (Nanofiber Layer)

The nanofiber layer of the filtering material for filtering water according to the present invention is formed from fibers having a single fiber average diameter of 10 to 1000 nm. If the average fiber diameter is less than 10 nm, the productivity of the fibers is decreased, resulting in deterioration of stable production. On the other hand, if the average fiber diameter is greater than 1000 nm, the collection efficiency for fine particles to be removed is decreased, resulting in deterioration of filtration accuracy. Thus, in order to complete both fiber productivity and filtration accuracy, the average fiber diameter of the single fibers constituting the nanofiber layer in the present invention needs to be 10 to 1000 nm and is preferably 100 to 600 nm. A method for producing fibers in which a single fiber average diameter falls within the above ranges is not particularly limited, but it is possible to form such fibers by publicly known electro-spinning described later. By accumulating electro-spun fibers, the nanofiber layer can be obtained in the form of a layer.

In the present invention, the nanofiber layer needs to be formed so as to meet the following conditions (1) to (3).
(1) The nanofiber layer has a basis weight of 0.1 to 10 g/m².
(2) The nanofiber is a continuous long fiber.
(3) The nanofiber is formed from at least an ethylene-vinyl alcohol copolymer.

If the basis weight of the nanofiber layer is less than 0.1 g/m², collection of fine particles to be removed is insufficient. If the basis weight of the nanofiber layer is too large such as exceeding 10 g/m², a pressure loss is increased. Thus, the basis weight of the nanofiber layer of the filtering material for filtering water according to the present invention needs to be 0.1 to 10 g/m², is preferably 0.3 to 8 g/m², and is further preferably 0.5 to 6 g/m².

In addition, the nanofibers need to be in the form of continuous long fibers. The nanofibers of continuous long fibers can be formed by electro-spinning. If a filtering material is formed from nanofibers in the form of short fibers, the short fibers themselves may fall off during filtering. In addition, since the filtering material formed from the short fibers has an increased thickness, it is impossible to form a compact filter. Here, the short fibers refer to a fiber cut into a length of 200 mm or shorter, and the nanofiber layer formed from the continuous long fibers in the present invention substantially do not contain such short fiber that has been intentionally cut.

Furthermore, an important point in the present invention is that the nanofiber layer comprises at least an ethylene-vinyl alcohol copolymer and preferably comprises an ethylene-vinyl alcohol copolymer. The present inventors have found that when an ethylene-vinyl alcohol copolymer is used as a polymer constituting a filtering material for filter, although the ethylene-vinyl alcohol copolymer is hydrophilic, the ethylene-vinyl alcohol copolymer nanofibers can have dimensional stability in water, and further found that when the nanofibers are used for a filtering material for filter in order to remove fine particles in water, such a significant effect is provided that the above filter can achieves filtering at high filtration accuracy as well as low initial pressure loss.

### (Ethylene-Vinyl Alcohol Copolymer)

In light of balance between dimensional stability in water and hydrophilicity, the ethylene-vinyl alcohol copolymer used in the present invention has an ethylene content of 3 to 70 mol% and further preferably 20 to 55 mol%. In addition, its saponification degree is not less than 80 mol% and further preferably not less than 98 mol%. If the saponification degree is less than 80 mol%, the degree of crystallinity of the ethylene-vinyl alcohol copolymer may be decreased, not preferable for the strength properties of the nanofibers. In addition, as the ethylene-vinyl alcohol copolymer, a mixture of copolymers having different ethylene contents, such as a combination of a copolymer having an ethylene content of 20 to 55 mol% and a copolymer having an ethylene content of 3 to 20 mol%, may be used.

The ethylene-vinyl alcohol copolymer is obtained by saponifying an ethylene-vinyl acetate copolymer. The ethylene-vinyl acetate copolymer also may be a copolymer in which another fatty acid vinyl ester (vinyl propionate, vinyl pivalate, etc.) is used in combination in a small amount (20 mol% or less relative to vinyl acetate) when ethylene and vinyl acetate are copolymerized. As the ethylene-vinyl alcohol copolymer, a copolymer having a number average molecular weight of about 8000 to 20000 is preferably used. In addition, after formation of nanofibers, the copolymer of the nanofibers may be subjected to acetalization or cross-linking treatment with aldehyde, dialdehyde, or the likes.

The ethylene-vinyl alcohol copolymer is commercially produced, for example, under the trade name of "EVAL" produced by Kuraray Co., Ltd. and the trade name of "SoarnoL" produced by The Nippon Synthetic Chemical Industry Co., Ltd and easily available.

In the present invention, the nanofiber comprises at least an ethylene-vinyl alcohol copolymer as a constituent. In addition, the nanofiber may be ether made solely of an ethylene-vinyl alcohol copolymer or may be formed blends of an ethylene-vinyl alcohol copolymer with a water-soluble or dimethyl sulfoxide (DMSO)-soluble polymer, such as a polyvinyl alcohol, a polyethylene glycol, a polyethylene oxide, a polyacrylonitrile, and/or a polylactic acid. The nanofiber layer is formed by electro-spinning from a spinning solution obtained by dissolving both ethylene-vinyl alcohol copolymer and such polymer(s) in the above solvent. In the case where the ethylene-vinyl alcohol copolymer is mixed with such polymer(s), the proportion of the ethylene-vinyl alcohol copolymer is in an amount of at least 10 mass% or greater.

### (Production of Nanofibers)

Nanofibers can be produced from a spinning melt prepared by melting an ethylene-vinyl alcohol copolymer or a spinning solution prepared by dissolving an ethylene-vinyl alcohol copolymer in a solvent. In order to make the ethylene-vinyl alcohol copolymer molten, the ethylene-vinyl alcohol copolymer is heated and molten with an extruder or a heating medium so as to prepare a spinning melt. In order to make the ethylene-vinyl alcohol copolymer dissolved in the solvent, the ethylene-vinyl alcohol copolymer is dissolved in dimethyl sulfoxide or a mixture of water and a lower alcohol such as methyl alcohol, ethyl alcohol, or 1-propanol as a solvent, so as to produce an ethylene-vinyl alcohol copolymer solution. This solution can be used as a spinning solution.

The nanofibers can be obtained by discharging the above spinning melt or solution from a nozzle and forming fibers by electro-spinning. While a high voltage is applied to an electro-conductive member capable of supplying spinning melt or solution, the spinning melt or solution extruded from the nozzle is electrified (or charged) to split into droplets from the spinning melt or solution. Thereafter, under the influence of an electrical field, fibers are continuously drawn from one point of each of the liquid droplets, and a large number of split and divided fibers are spread in a continuous state and deposited on the side of a counter electrode being earthed, whereby a sheet-like nanofiber layer can be accumulated. Accordingly, even if the concentration of the polymer in the solution is not greater than 10%, the solvent is easily evaporated during splitting and fiber formation and fibrillation, so that the layer of nanofibers finally is deposited on a collecting belt or sheet positioned at a distance of several centimeters to several tens of centimeters from the nozzle. While being deposited, nanofibers which still contain residual solvent or do not completely solidified can slightly stick together and become difficult to move. Then, fresh nanofibers are successively deposited and collected under such situation to form a dense sheet on the collecting belt or sheet. A nonwoven or woven fabric, which is a base material, may be placed on the accumulation surface so as to deposit the nanofibers thereon to form a laminate. The single fiber average diameter of the nanofibers can be controlled to a predetermined average fiber diameter by adjusting conditions such as a polymer concentration in the spinning solution, a distance between the nozzle and the formation surface of the nanofiber sheet (an inter-electrode distance), a voltage applied to the nozzle, and the like.

### (Base Material)

As the base material constituting the filtering material according to the present invention together with the nanofiber layer, there may be used a nonwoven or woven fabric formed from hydrophilic fibers having a single fiber average diameter of not less than 1 µm. The base material having a single fiber average diameter of less than 1 µm may make the tensile strength of the sheet decreased, may deteriorate processability of the sheet into a filter, and further may lower durability of the filter. Preferably, the nanofiber layer plays a role as a filtering material for filter to collect particles to be removed; the base material plays a role to ensure processability and durability of the filter. The single fiber average diameter of the fibers constituting the base material need to be not less than 1 µm, is preferably not less than 5 µm, and is further preferably not less than 7 µm. As an upper limit, the single fiber average diameter is preferably not greater than 200 µm and further preferably not greater than 100 µm.

The nonwoven fabric constituting the base material may be any of a drylaid nonwoven fabric obtained by a spun-bond method, a melt-blown method, a spun-lacing method, a thermal bonding method, a chemical bonding method, an air-laid method, or a needle-punching method, and a wetlaid nonwoven fabric. Among them, although a nonwoven fabric obtained by a production method in which spinning and sheet formation are simultaneously conducted, such as a spun-bond method and a melt-blown method, has a desired strength and is advantageous in terms of cost, since a wetlaid nonwoven fabric is excellent in strength, denseness, and uniformity, a wetlaid nonwoven fabric is particularly preferably used as the base material which supports the nanofiber layer in the present invention.

Nonwoven fabric formation by a wet process can be conducted by a method in which hydrophilic subject fibers constituting a later-described nonwoven fabric and a small amount of binder fibers for bonding the subject fibers are dispersed in water with a cut length of 3 to 20 mm and gently agitated to make a uniform slurry. The slurry is then supplied to a paper machine having at least one of wires such as a cylinder, a Fourdrinier, and a sloping type short wire so as to form a sheet. Furthermore, a nonwoven fabric obtained by such a method in either wet or dried condition may be further subject to be entangled by applying a stream of water thereto. Moreover, in the nonwoven fabric formation process, cut fibers may be subjected to beating treatment with a beater, a refiner, or the like. The beaten fibers may be used for preparing a slurry, if necessary with a thickener, a dispersant, or the like to form a sheet.

As the woven fabric constituting the base material, a woven textile obtained by means of weave such as plain weave, twill weave, or sateen weave from filament yarns, spun yarns, or the like is used. There is no particular limit as for the form of the woven fabric.

The basis weight of the nonwoven or woven fabric can be selected as appropriate depending on the balance between a function to support the nanofiber layer and a desired strength required for performing; and fulfillment of downsizing. The basis weight is selected preferably in a range of 20 to 500 g/m² and further preferably in a range of 40 to 300 g/m².

In the present invention, the nonwoven or woven fabric for the base material is formed from the hydrophilic fibers, and examples of a polymer forming the hydrophilic fibers may include a polyvinyl alcohol polymer, a cellulose based polymer, such as a regenerated cellulose and a cellulose acetate, an ethylene-vinyl alcohol polymer, a polyacrylonitrile based polymer, and the like. Moreover, even ordinary hydrophobic fibers can be encompassed in the hydrophilic fibers of the present invention when the hydrophobic fibers have a coating layer of a hydrophilic polymer such as, for example, a polyvinyl alcohol, a polyethylene glycol, a polyethylene oxide, a polyvinyl pyrrolidone, or a polymer having an ionic or polar group such as carboxylic acid and sulfonic acid as a surface layer by means of spinning for producing conjugate or bicomponent fibers, etc. Moreover, the nonwoven or woven fabric used as a base material layer may not exclusively consist of hydrophilic fibers, but may comprise hydrophilic fibers, for example, in an amount of 10 mass% or greater (relative to total fibers) and preferably in an amount of 20 mass% or greater so as to make the nonwoven or woven fabric hydrophilic on the whole.

Among the above polymers, fibers formed from a polyvinyl alcohol polymer is preferably used as fibers constituting the nonwoven or woven fabric of the base material, since these fibers have hydrophilicity and are excellent in strength properties. In particular, a nonwoven fabric obtained by a wetlaid process with polyvinyl alcohol polymer fibers is preferably used as a support layer for the nanofiber layer because of their strength, denseness, and uniformity. In this case, the single fiber average diameter of the polyvinyl alcohol fiber constituting the nonwoven fabric is 1 to 500 µm, preferably 1 to 300 µm, and further preferably 3 to 100 µm.

The wetlaid nonwoven fabric of polyvinyl alcohol polymer fiber used in one embodiment of the present invention can be formed by using the above wetlaid sheet production process under the condition that a polyvinyl alcohol polymer fiber having desired strength properties and water resistance is used as a subject fiber, that a water-soluble polyvinyl alcohol polymer fiber is used as a binder fiber, that the fibers are cut into a length of 3 to 20 mm, and that the mixture ratio of the subject fiber and the binder fiber is 70 to 95 mass% of the subject fiber and 30 to 5 mass% of the binder fiber. Further, instead of the above-described binder fiber, the wetlaid nonwoven fabric may be formed by using a bicomponent fiber comprising a core component formed from a subject fiber polymer and a sheath component formed from a polymer having a binder function. Moreover, the subject fiber may comprise fibers other than polyvinyl alcohol polymer fibers, for example, hydrophilic polymer fibers, such as cellulose based polymer, other than the above polyvinyl alcohol polymer. Further, the subject fiber may even comprise a small amount of hydrophobic fiber (a polypropylene fiber, a polyester fibers, etc.).

The subject fibers of polyvinyl alcohol polymer can be formed by dissolving a polyvinyl alcohol polymer (average polymerization degree: 1200 to 3000, saponification degree: 99 mol% or greater) in a solvent such as water, dimethyl sulfoxide, or dimethyl sulfonamide to prepare a spinning solution, then extruding the spinning solution from a nozzle to form as-spun yarns by a wet spinning method (a coagulation bath: sodium sulfate, a caustic soda aqueous solution, methanol, etc.), a dry spinning method, or a dry-wet spinning method. The as-spun yarn is further subjected to drawing such as wet-heat drawing or dry-heat drawing, and/or another treatment such as heat setting. If necessary, acetalization may be further conducted. Further, a polyvinyl alcohol polymer fiber having a flattened cross-sectional shape may be used as a subject fiber (see JP Laid-open Patent Publication No. 2004-293027).

The binder fiber for bonding the subject fibers can be obtained by spinning a polyvinyl alcohol polymer (average polymerization degree: 500 to 1700, saponification degree: 60 to 90 mol%) in the same manner as described above to give an as-spun yarn, and then without conducting drawing or by conducting slight drawing of the as-spun yarn.

### (Lamination of Nanofiber Layer and Base Material)

There are several methods for lamination of the nanofiber layer and the base material. A nanofiber layer and a base material which are previously and individually formed may be laminated on each other. A nanofiber layer may be accumulated on a base material layer (or a layer made of a base material) which is previously formed. Alternatively, a nonwoven fabric as a base material layer formed by a spun-bond method or a melt-blown method may be continuously supplied to an electro-spinning station (apparatus) without winding, and then nanofibers may be formed by electro-spinning and accumulated on the supplied nonwoven fabric to be laminated. In addition, each of the nanofiber layer and the base material layer is not necessary to comprise a single layer, but may comprise a plurality of layers having different fiber diameters with each other.

On the laminate comprising the nanofiber layer/the base material laminated as described above, another nanofiber layer/another base material layer can be further laminated, thereby providing a four-layer structure of base material layer/nanofiber layer/base material layer/nanofiber layer. The configuration of the laminate comprising the nanofiber layer and the base material may have a further multilayer configuration, in addition to the above four-layer configuration.

Moreover, it is possible to adjust the thickness of the laminate to an intended thickness by hot pressing or cold pressing if necessary.

Furthermore, the above laminate may be bonded by means of thermal bonding such as embossing treatment or calendaring treatment. In this case, the laminate may be bonded by means of, for example, chemical bonding in which a hot-melt adhesive, an emulsion type adhesive, or the like is applied between the nanofiber layer and the base material.

The above embossing treatment is a treatment in which the nanofiber layer and the base material are overlaid on each other and are passed between an engraved roll and a flexible roll which are heated and pressurized.

The calendaring treatment is a treatment in which the nanofiber layer and the base material are overlaid on each other and are passed between a pair of calendar rolls which are heated and pressurized.

From the standpoint of enhancing adhesion between the nanofiber layer and the base material layer, the above embossing treatment or calendaring treatment is conducted preferably at a temperature of 20 to 150°C and a pressure of 10 to 150 Kg/cm and more preferably at a temperature of 50 to 120°C and a pressure of 40 to 100 Kg/cm.

### (Various Additives)

If necessary, as long as the purpose or the advantageous effects of the present invention are not impaired, a plasticizer, an antioxidant, a slip additive, an ultraviolet absorber, a light stabilizer, an antistatic agent, a fire retardant, a lubricant, a crystallization rate retarder, a coloring agent, and the like may be added to an ethylene-vinyl alcohol copolymer or the like which is the raw material for the nanofibers, or added to a polymer which is the raw material for the base material. In addition, the nanofiber surface or the base material fiber surface may be treated with a solution including the above additives.

### (Filter Cartridge)

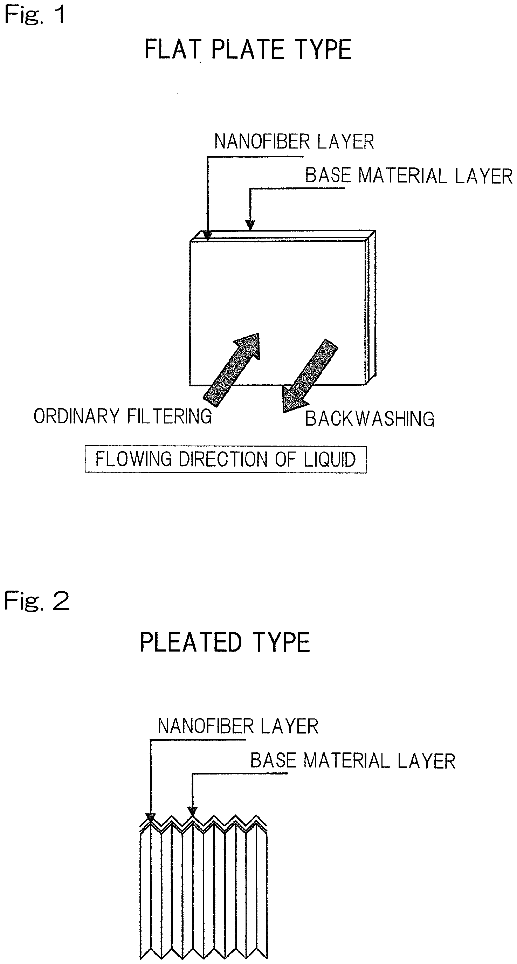

A filter cartridge used in the present invention may be any of publicly known filter cartridges. Examples of the filter cartridge include a flat plate type cartridge in which a plurality of flat plate type filter units each formed by arranging two rectangular filtering materials such that the filtering materials which face with each other are arranged side by side, and a pleated type cartridge with a structure in which a filtering material is folded into a pleated shape. Fig. 1 shows one embodiment of a filtering material which is to be incorporated into a flat plate type cartridge and in which a nanofiber layer and a base material layer are laminated on each other. In the preferred cartridge, water to be treated is supplied from the nanofiber layer side, while backwashing water is supplied from the base material layer side during backwashing. Fig. 2 shows another embodiment of a pleated filtering material which is to be incorporated into a pleated type cartridge, in which a nanofiber layer and a base material layer are laminated on each other and pleated. The flat plate type filter unit preferably comprises two filtering materials each comprising a nanofiber layer/a base material layer, in which the filter materials face each other such that each of the nanofiber layers is provided as the outer surfaces of the filter unit in order to bring the nanofiber layers into contact with water to be treated. These filter materials are mounted to an outer boundary frame of the cartridge. The water to be treated is filtrated while passing through the filtering materials, and discharged from an outlet mounted to the outer boundary frame. As a filtering material provided in the pleated type cartridge filter, the above-described laminate in which the nanofiber layer and the base material are laminated on each other is pleated and folded, so that the folded filtering material is wound around a core, followed inserted into a cylindrical container to be used for filtering water. With such a filter cartridge, fine particles having a particle diameter of 1 µm to several hundreds of micrometers in water can be efficiently collected.

### EXAMPLES

The present invention will be described in more detail below by means of examples, but the present invention is not limited to these examples in any manner. It should be noted that in the following examples, each physical property value was measured by the following methods. It should be noted that parts and % in the examples are related to mass unless otherwise specified.

### (Measurement of Basis Weight)

A basis weight was measured according to JIS-L1906 "Test methods for nonwoven fabrics made of filament yarn".

### (Measurement of Average Fiber Diameter)

Twenty fibers were selected randomly from fibers constituting a nonwoven fabric in an enlarged photograph showing a cross-section of the nonwoven fabric photographed with a microscope (scanning electron microscope; "S-510" manufactured by Hitachi, Ltd.) at 5000 times magnification. The fiber diameters of these fibers were measured, and the average of the fiber diameters was regarded as an average fiber diameter.

### (Measurement of Collection Efficiency)

Silica fine particles having a particle diameter of 1.0 µm were mixed with water in a ratio of 0.02 mass% with an ultrasonic agitator so as to be sufficiently and uniformly dispersed in water. When the dispersion was passed through a filtering material at a pressure of 0.05 MPa, concentrations of the liquid before and after the passing were measured by absorptiometry so as to calculate collection efficiency (%) for the particles.

### (Measurement of Pressure Loss)

A pressure loss (Pa) was sought by reading values of a pressure gauge under static pressure at upstream and downstream of a sample subjected to the above measurement of collection efficiency.

An initial pressure loss is the value of an average initial pressure loss measured after flowing fluid for 30 minutes. A pressure loss after 24 hours is the value of an average initial pressure loss after flowing fluid for 24 hours. A pressure loss after backwashing is the value of an average initial pressure loss measured after flowing fluid for 30 minutes. Before measurement of the pressure loss after backwashing, filter washing was conducted after flowing fluid for 24 hours.

### (Evaluation of Adhesive State between Base Material Layer and Nanofiber Layer)

After flowing fluid for 24 hours, a filter was washed and then taken out. Then an adhesion state between the base material layer and the nanofiber layer was visually observed for evaluation.

### <Examples 1 to 7>

A nanofiber layer (EVOH-NF) of an ethylene-vinyl alcohol copolymer and a wetlaid nonwoven fabric of a polyvinyl alcohol (PVA) fiber were laminated on each other to obtain a filtering material for filtering water according to the present invention having specifications shown in Table 1. The filtering performance of the filtering material was measured to obtain results shown in Table 2.

### (1) Production of Filtering Material for Filter

### a) Wetlaid Nonwoven Fabric Formed from Polyvinyl Alcohol (PVA) Fiber

By using a wet-spinning method, an aqueous solution of polyvinyl alcohol (PVA) having an average polymerization degree of 1700 and a saponification degree of 99.9 mol% was extruded into a coagulation bath containing a saturated sodium sulfate aqueous solution. The as-spun yarn was subjected to wet-heat drawing and then dry-heat drawing. Further, the drawn fiber was subjected to formalization by a publicly known method to obtain a polyvinyl alcohol fiber having an average single fiber diameter of 8 µm. Thus obtained fibers were cut into a length of 10 mm to produce a subject fiber for papermaking. By mixing 90 mass% of the subject fibers for papermaking and 10 mass% of vinylon binder fibers "VPW101" manufactured by Kuraray Co., Ltd. with each other, followed by wetlaid sheet making process, a wetlaid nonwoven fabric was produced and treated as a base material layer.

### b) A nanofiber layer (EVOH-NF) of an ethylene-vinyl alcohol copolymer (EVOH) was formed as described below, to produce a nanofiber layer having properties (single fiber average diameter and basis weight of nanofiber layer) shown in Table 1.

An ethylene-vinyl alcohol copolymer (manufactured by Kuraray Co., Ltd.: EVAL-G) was added to a DMSO solvent in a concentration of 14 mass%, and the mixture was allowed to stand at 25°C to dissolve the copolymer in the solvent, to obtain a spinning solution. Electro-spinning was conducted using thus obtained spinning solution. A needle with an inner diameter of 0.9 mm was used as a spinneret, and the spinneret and a sheet take-up apparatus were spaced at a distance of 8 cm from each other. In addition, the wetlaid nonwoven fabric of the polyvinyl alcohol fibers was wound around the sheet take-up apparatus, and the spinning solution was extruded from the spinneret onto the nonwoven fabric on an accumulation conveyor moving at a speed of 0.1 m/min and a predetermined feed rate, with applying a voltage of 20 kV to the spinneret, thereby laminating a nanofiber layer having an average fiber diameter and a basis weight shown in Table 1. Then, calendaring treatment was conducted on the obtained laminate comprising the nanofiber layer/the base material layer at a heating temperature of 120°C, a line speed of 1 m/min, and a pressing pressure of 0.1 MPa, to produce a filtering material for filter according to the present invention.

### (2) Production of Flat Plate Filter Cartridge

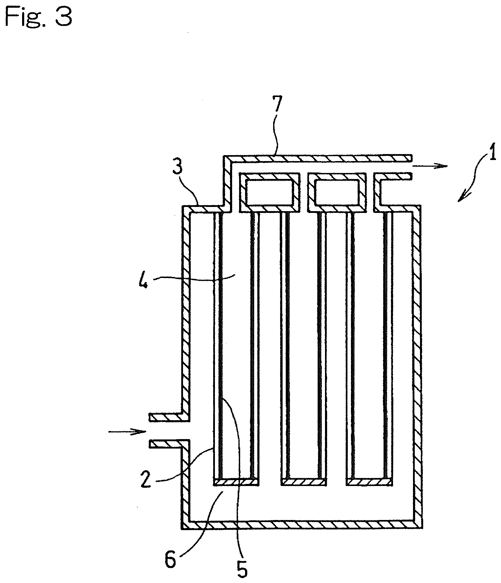

A flat plate filter cartridge including the filtering material for filter according to the present invention was produced. A schematic diagram thereof is shown in Fig. 3.

Two sheets of filtering material 2 for filter according to the present invention (having a rectangular sheet shape with a size of A4) were arranged on both sides of an outer boundary frame 3 (having an outlet to drain a treated liquid at its upper portion) such that the filtering materials 2 face each other (each of the nanofiber layers is provided as the outer surfaces of the filter). Between the two filtering materials, a flow path 4 was provided to flow a liquid to be treated. In order to prevent the filtering materials from deformation, a porous support (plastic net) 5 was inserted between the filtering materials so as to form a filter unit 6. Three units were arranged and provided side by side to produce a cartridge 1 in which a shared collecting pipe 7 was mounted for connecting the unit and collecting a treated liquid from each of the liquid outlet of the unit. Test was conducted using this cartridge comprising three filter units. Accordingly, measurement results were shown as an integrated datum collecting three streams of water to be treated.

### <Comparative Examples 1 to 11>

With respect to each of the following filtering materials, the properties thereof are shown in Table 1, and the filtering performance thereof is shown in Table 2.
(1) A filtering material (Comparative Example 1) produced by conducting the above-described calendaring treatment on a wetlaid nonwoven fabric comprising a fiber of a semi-aromatic polyamide (a polyamide comprising terephthalic acid unit, 1,9-nonane diamine unit, and 2-methyl-1,8-octane diamine unit) available under the trade name of "polyamide 9MT" fiber manufactured by Kuraray Co., Ltd. without laminating a nanofiber layer. A filtering material (Comparative Example 2) produced by conducting the above-described calendaring treatment on a wetlaid nonwoven fabric comprising a polyvinyl alcohol (PVA) fiber without laminating a nanofiber layer.
(2) Filtering materials (Comparative Examples 3 to 7) in which a nanofiber layer (PVDF-NF) of a polyvinylidene fluoride and a base material layer of a wetlaid nonwoven fabric comprising a polyethylene terephthalate (PET) fiber are laminated on each other.
(3) A filtering material (Comparative Example 8) in which a nanofiber layer (PAN-NF) of a polyacrylonitrile and a wetlaid nonwoven fabric comprising a polyethylene terephthalate (PET) fiber are laminated on each other.
(4) A filtering material (Comparative Example 9) in which a nanofiber layer (PA66-NF) of a nylon 66 and a wetlaid nonwoven fabric comprising a nylon 66 (PA66) fiber are laminated on each other.
(5) A filtering material (Comparative Example 10) in which a nanofiber layer (EVOH-NF) of an ethylene-vinyl alcohol and a wetlaid nonwoven fabric comprising a polyethylene terephthalate (PET) fiber are laminated on each other.
(6) A filtering material (Comparative Example 11) in which a nanofiber layer (PVA-NF) of a polyvinyl alcohol and a wetlaid nonwoven fabric comprising a polyvinyl alcohol (PVA) fiber are laminated on each other.

**[Table 1]**

| | Configuration | Base material | | Nanofiber layer | |
|---|---|---|---|---|---|
| | | Base material basis weight (g/m²) | Average fiber diameter (µm) | NF layer basis weight (g/m²) | Average fiber diameter (nm) |
| Example 1 | EVOH-NF/PVA nonwoven fabric | 60 | 8 | 3.0 | 200 |
| Example 2 | Ditto | 60 | 8 | 8.0 | 200 |
| Example 3 | Ditto | 60 | 8 | 0.3 | 200 |
| Example 4 | Ditto | 60 | 8 | 3.0 | 80 |
| Example 5 | Ditto | 60 | 8 | 3.0 | 40 |
| Example 6 | Ditto | 60 | 8 | 3.0 | 500 |
| Example 7 | Ditto | 60 | 8 | 3.0 | 800 |
| Comparative Example 1 | 9MT nonwoven fabric calendaring | 60 | 8.8 | - | - |
| Comparative Example 2 | PVA nonwoven fabric calendaring | 60 | 8 | - | - |
| Comparative Example 3 | PVDF-NF/PET nonwoven fabric | 60 | 8 | 3.0 | 200 |
| Comparative Example 4 | Ditto | 60 | 8 | 8.0 | 200 |
| Comparative Example 5 | Ditto | 60 | 8 | 0.3 | 200 |
| Comparative Example 6 | Ditto | 60 | 8 | 3.0 | 100 |
| Comparative Example 7 | Ditto | 60 | 8 | 3.0 | 500 |
| Comparative Example 8 | PAN-NF/PET nonwoven fabric | 60 | 8.8 | 3.0 | 170 |
| Comparative Example 9 | PA66-NF/PA66 nonwoven fabric | 60 | 8 | 3.0 | 200 |
| Comparative Example 10 | EVOH-NF/PET nonwoven fabric | 60 | 8 | 3.0 | 200 |
| Comparative Example 11 | PVA-NF/PVA nonwoven fabric | 60 | 8 | 3.0 | 200 |

**[Table 2]**

| | Configuration | Collection efficiency (%) | Initial pressure loss (k/Pa) | Collection efficiency after 24h (%) | Pressure loss after 24h (k/Pa) | Pressure loss after backwashing (k/Pa) | Adhesion between base material and NF layer |
|---|---|---|---|---|---|---|---|
| Example 1 | EVOH-NF/PVA nonwoven fabric | 99 | 2 | 99 | 30 | 4 | Adhesion kept |
| Example 2 | Ditto | 99 | 3 | 99 | 32 | 5 | Adhesion kept |
| Example 3 | Ditto | 98 | 1 | 99 | 28 | 3 | Adhesion kept |
| Example 4 | Ditto | 99 | 3 | 99 | 36 | 3 | Adhesion kept |
| Example 5 | Ditto | 99 | 3 | 99 | 38 | 3 | Adhesion kept |
| Example 6 | Ditto | 95 | 1 | 99 | 48 | 4 | Adhesion kept |
| Example 7 | Ditto | 94 | 1 | 99 | 53 | 5 | Adhesion kept |
| Comparative Example 1 | 9MT nonwoven fabric calendaring | 82 | 300 | 85 | - | - | - |
| Comparative Example 2 | PVA nonwoven fabric calendaring | 85 | 200 | 88 | - | - | - |
| Comparative Example 3 | PVDF-NF/PET nonwoven fabric | 99 | 20 | 99 | 48 | 31 | Separation |
| Comparative Example 4 | Ditto | 99 | 35 | 99 | 67 | 46 | Separation |
| Comparative Example 5 | Ditto | 95 | 15 | 95 | 42 | 24 | Separation |
| Comparative Example 6 | Ditto | 99 | 45 | 99 | 79 | 52 | Separation |
| Comparative Example 7 | Ditto | 94 | 4 | 94 | 54 | 21 | Separation |
| Comparative Example 8 | PAN-NF/PET nonwoven fabric | 99 | 4 | 99 | 35 | 13 | Separation |
| Comparative Example 9 | PA66-NF/PA66 nonwoven fabric | 99 | 5 | 99 | 37 | 15 | Adhesion kept |
| Comparative Example 10 | EVOH-NF/PET nonwoven fabric | 99 | 2 | 99 | 32 | 6 | Separation |
| Comparative Example 11 | PVA-NF/PVA nonwoven fabric | 99 | 3 | 87 | 49 | 7 | Adhesion kept |

The above results revealed the following points.
(1) In the case of calendaring the 9MT nonwoven fabric (Comparative Example 1) or calendaring the PVA nonwoven fabric (Comparative Example 2), fine particles enter into the base material layer since there was no nanofiber layer attached thereto. Thus the initial pressure loss was very high while the collection efficiency was very low in these comparative examples. In addition, fine particles in both of the base material layers were not able to be removed by backwashing.
(2) When Example 1 and Comparative Example 3 are compared with each other, Example 2 and Comparative Example 4 are compared with each other, Example 3 and Comparative Example 5 are compared with each other, and Example 6 and Comparative Example 7 are compared with each other, each of the comparative examples was inferior in initial pressure loss, pressure loss after 24 hours, and pressure loss after backwashing. Further, the adhesive strength between layers in the comparative examples was also poor.
(3) When Example 5, Example 4, Examples 1 to 3, Example 6, and Example 7, in which the average fiber diameters of the nanofibers are different from each other, are compared with each other, examples with larger average fiber diameter tend to have lower initial pressure loss while examples with smaller average fiber diameter tend to have lower pressure loss after backwashing. Regardless of the magnitude of the average fiber diameter, the adhesive strength between layers is in the sufficient level to be applicable for practical use.
(4) With regard to the filtering material comprising PVDF-NF/PET nonwoven fabric (Comparative Examples 3 to 7), even when the average fiber diameter of the nanofiber layer is changed, the adhesive strength between layers is poor. Further these comparative examples also deteriorated in initial pressure loss, pressure loss after 24 hours, and pressure loss after backwashing by showing high pressure loss. Although the filter material comprising EVOH-NF/PVA nonwoven fabric according to the present invention is excellent in adhesive strength between layers, the filter material comprising EVOH-NF/PET nonwoven fabric (Comparative Example 10) has a poor adhesive strength between layers.
(5) The filtering material comprising PAN-NF/PET nonwoven fabric (Comparative Example 8) has a poor adhesive strength, a high initial pressure loss, and a high pressure loss after backwashing.
(6) The hydrophobic filtering material comprising PA66-NF/PA66 nonwoven fabric (Comparative Example 9) has a high initial pressure loss and a high pressure loss after backwashing.
(7) Although the filter material comprising EVOH-NF/PVA nonwoven fabric according to the present invention is excellent in adhesive strength between layers, the filter material comprising EVOH-NF/PET nonwoven fabric (Comparative Example 10) has a poor adhesive strength between layers.
(8) In the case of using PVA-NF instead of EVOH-NF (Comparative Example 11), the adhesion between layers is kept, but the filter material deteriorates in collection efficiency after 24 hours and pressure loss after backwashing.

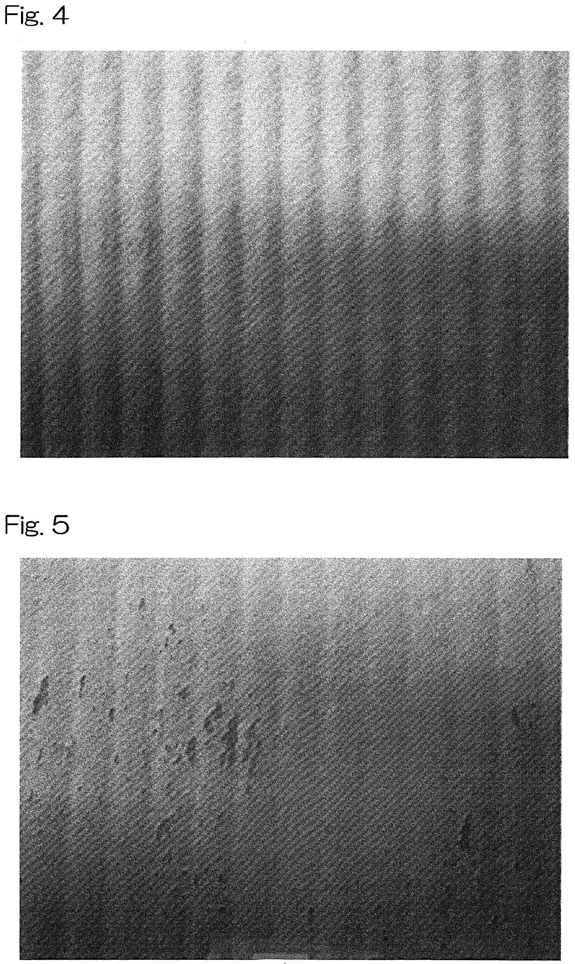

(9) Figs. 4 and 5 show an example in which the adhesion between layers is kept (Example 1), and an example in which the nanofiber layer and the base material layer separated from each other (Comparative Example 3), respectively. The sample in Fig. 4 shows that the nanofiber layer at the surface is kept. On the other hand, the sample in Fig. 5 shows that because of the separation or peeling of the superficial nanofiber layer from the base material layer originally positioned below the nanofiber, the base material layer is exposed on the surface.

The filtering material for filtering water according to the present invention can be suitably used as a long-life filtering material for various water filters thanks to small initial pressure resistance. Specific examples of the application fields include the pharmaceutical industry field, the electronics industry field, the food industry field, and the automobile industry field.

## Claims

1. A water filter material (2) comprising: a laminated sheet, which comprises:
a nanofiber layer formed from a nanofiber having a single fiber average diameter of 10 to 1000 nm, the nanofiber layer meeting all the following conditions (1) to (3):
(1) the nanofiber layer has a basis weight of 0.1 to 10 g/m²,
(2) the nanofiber is a continuous long fiber, and
(3) the nanofiber is formed by electro-spinning from a spinning solution containing at least 10% by mass of an ethylene-vinyl alcohol copolymer having an ethylene content of 3 to 70 mol% and a saponification degree of more than 80%, said copolymer is obtained by saponifying an ethylene-vinyl acetate copolymer. and
a base material comprising a nonwoven or woven fabric comprising a hydrophilic fiber having a single fiber average diameter of not less than 1µm, the nanofiber layer and the base material being laminated on each other.

2. The water filter material (2) as claimed in claim 1, wherein the ethylene-vinyl alcohol copolymer has an ethylene content of 20 to 55 mol %.

3. The water filter material (2) as claimed in claim 1 or 2, wherein the nanofiber layer is an electro-spun fiber aggregate layer.

4. The water filter material (2) as claimed in claim 3, wherein the hydrophilic fiber constituting the nonwoven fabric comprises a polyvinyl alcohol polymer.

5. The water filter material (2) as claimed in claim 1, wherein the base material has a basis weight of from 20 to 500 g/m².

6. The water filter material (2) as claimed in claim 5, wherein the laminated sheet comprises a base material and an electro spun fiber aggregate layer on the base material.

7. The water filter material (2) as claimed in claim 6, wherein the laminated sheet is subjected to embossing treatment or calendaring treatment after formation of the fiber aggregate layer.

8. A filter cartridge comprising at least partially the water filter material as claimed in any one of claims 1 to 7.

9. A water filtering apparatus (1) comprising: a filter cartridge as claimed in claim 8.

## Patentansprüche

1. Wasserfiltermaterial (2) mit: einer laminierten Schicht, die aufweist:
eine Nanofaserschicht, die aus einer Nanofaser mit einem durchschnittlichen Einzelfaserdurchmesser von 10 bis 1000 nm ausgebildet ist, wobei die Nanofaserschicht alle folgenden Bedingungen (1) bis (3) erfüllt:
(1) die Nanofaserschicht hat ein Flächengewicht von 0,1 bis 10 g/m²;
(2) die Nanofaser ist eine kontinuierliche lange Faser; und
(3) die Nanofaser wird durch Elektrospinnen aus einer Spinnlösung hergestellt, die mindestens 10 Masse-% eines Ethylen-Vinylalkohol-Copolymers mit einem Ethylengehalt von 3 bis 70 Mol-% und mit einem Verseifungsgrad von mehr als 80% enthält, wobei das Copolymer durch Verseifen eines EthylenVinylacetat-Copolymers erhalten wird; und
ein Basismaterial, das einen Vlies- oder Webstoff mit einer hydrophilen Faser mit einem durchschnittlichen Einzelfadendurchmesser von nicht weniger als 1 µm enthält, wobei die Nanofaserschicht und das Basismaterial aufeinander laminiert sind.

2. Wasserfiltermaterial (2) nach Anspruch 1, wobei das Ethylen-Vinylalkohol-Copolymer einen Ethylengehalt von 20 bis 55 Mol-% aufweist.

3. Wasserfiltermaterial (2) nach Anspruch 1 oder 2, wobei die Nanofaserschicht eine durch Elektrospinnen erhaltene Faseraggregatschicht ist.

4. Wasserfiltermaterial (2) nach Anspruch 3, wobei die hydrophile Faser, die den Vliesstoff bildet, ein Polyvinylalkoholpolymer aufweist.

5. Wasserfiltermaterial (2) nach Anspruch 1, wobei das Basismaterial ein Flächengewicht von 20 bis 500 g/m² hat.

6. Wasserfiltermaterial (2) nach Anspruch 5, wobei die laminierte Schicht ein Basismaterial und eine durch Elektrospinnen erhaltene Faseraggregatschicht auf dem Basismaterial aufweist.

7. Wasserfiltermaterial (2) nach Anspruch 6, wobei die laminierte Schicht nach dem Ausbilden der Faseraggregatschicht einer Prägebehandlung oder einer Kalandrierbehandlung unterzogen wird.

8. Filterkartusche, die mindestens teilweise das Wasserfiltermaterial nach einem der Ansprüche 1 bis 7 aufweist.

9. Wasserfiltervorrichtung (1) mit einer Filterkartusche nach Anspruch 8.

## Revendications

1. Matériau de filtre d'eau (2) comprenant : une feuille stratifiée, qui comprend :
une couche de nanofibres formée à partir d'une nanofibre présentant un diamètre moyen de monofibre de 10 à 1000 nm, la couche de nanofibres satisfaisant toutes les conditions (1) à (3) suivantes :
(1) la couche de nanofibres présente un poids de base de 0,1 à 10 g/m²,
(2) la nanofibre est une fibre longue continue, et
(3) la nanofibre est formée par électrofilage à partir d'une solution de filage contenant au moins 10 % en masse d'un copolymère d'éthylène-alcool vinylique présentant une teneur en éthylène de 3 à 70 % en mole et un degré de saponification de plus de 80 %, ledit copolymère est obtenu par la saponification d'un copolymère d'éthylène-acétate de vinyle,
et
un matériau de base comprenant un tissu non tissé ou tissé comprenant une fibre hydrophile présentant un diamètre moyen de monofibre de pas moins de 1 µm, la couche de nanofibres et le matériau de base étant stratifiés l'un sur l'autre.

2. Matériau de filtre d'eau (2) selon la revendication 1, dans lequel le copolymère d'éthylène-alcool vinylique présente une teneur en éthylène de 20 à 55 % en mole.

3. Matériau de filtre d'eau (2) selon la revendication 1 ou 2, dans lequel la couche de nanofibres est une couche d'agrégat de fibres électrofilées.

4. Matériau de filtre d'eau (2) selon la revendication 3, dans lequel la fibre hydrophile constituant le tissu non tissé comprend un polymère de polyalcool vinylique.

5. Matériau de filtre d'eau (2) selon la revendication 1, dans lequel le matériau de base présente un poids de base allant de 20 à 500 g/m².

6. Matériau de filtre d'eau (2) selon la revendication 5, dans lequel la feuille stratifiée comprend un matériau de base et une couche d'agrégat de fibres électrofilées sur le matériau de base.

7. Matériau de filtre d'eau (2) selon la revendication 6, dans lequel la feuille stratifiée est soumise à un traitement de gaufrage ou à un traitement de calandrage après la formation de la couche d'agrégat de fibres.

8. Cartouche de filtration comprenant au moins partiellement le matériau de filtre d'eau selon l'une quelconque des revendications 1 à 7.

9. Appareil de filtration d'eau (1) comprenant : une cartouche de filtration selon la revendication 8.
